## Europäisches Patentamt
## European Patent Office
## Office européen des brevets

(19)

(11) Veröffentlichungsnummer: **0 297 036 B1**

(12) **EUROPÄISCHE PATENTSCHRIFT**

(45) Veröffentlichungstag der Patentschrift:
**18.12.91 Patentblatt 91/51**

(51) Int. Cl.⁵: **C09J 7/02, B32B 33/00**

(21) Anmeldenummer: **88810384.3**

(22) Anmeldetag: **10.06.88**

(54) **Schichtkörper.**

(30) Priorität: **19.06.87 DE 3720267**

(43) Veröffentlichungstag der Anmeldung:
**28.12.88 Patentblatt 88/52**

(45) Bekanntmachung des Hinweises auf die
Patenterteilung:
**18.12.91 Patentblatt 91/51**

(84) Benannte Vertragsstaaten:
**AT BE CH DE ES FR GB GR IT LI LU NL SE**

(56) Entgegenhaltungen:
**US-A- 2 915 413**
**US-A- 4 370 369**

(73) Patentinhaber: **Gurit-Essex AG**
**CH-8807 Freienbach (CH)**

(72) Erfinder: **Rohrer, Paul, Dr., Dipl.-Ing.**
**Feldstrasse 50**
**CH-8704 Herrliberg (CH)**
Erfinder: **Haelg, Paul, Dr., Dipl.-Ing.**
**Bürglistrasse 2**
**CH-8805 Richterswil (CH)**

(74) Vertreter: **Rottmann, Maximilian R.**
**c/o Rottmann, Maspoli + Zimmermann AG**
**Glattalstrasse 37**
**CH-8052 Zürich (CH)**

## Beschreibung

Die vorliegende Erfindung bezieht sich auf einen Schichtkörper nach dem Oberbegriff des Patentanspruchs 1 bzw. Patentanspruchs 2.

Solche Schichtkörper können aus einer ersten, faserverstärkten Schicht, z.B. einem harzgebundenen Glasfasergewebe bestehen, deren eine Oberfläche mit einer zweiten Schicht aus wärmehärtendem, klebrigem Harz versehen ist. Ein derartiger Verbund kann zur Verstärkung von ebenen und gewölbten Blechen verwendet werden, indem ein Stück des Verbundes mit der klebrigen Harz-Seite auf das Blech aufgelegt und dann thermisch behandelt wird. Dabei erfolgt einerseits eine Verklebung des Schichtkörpers mit dem Blech, und andererseits eine Aushärtung der Harzschichten, so dass zwischen Blech und faserverstärkter Schicht eine schubsteife Verbindung entsteht. Dadurch lässt sich auf einfache Weise, ohne namhaftes zusätzliches Gewicht, eine bedeutende Versteifung der betreffenden Blechpartie erreichen.

Im Interesse einer einfachen Applikation des Schichtkörpers bildet man die Harz-Schicht im allgemeinen mit klebriger Oberfläche aus, so dass der einmal angebrachte Schichtkörper bis zur thermischen Behandlung an der betreffenden Stelle des Bleches haftet. Dies bedingt aber, dass die Harz-Oberfläche des Schichtkörpers bis zu dessen Verwendung mit einem Schutz versehen werden muss, um sie vor Verschmutzung zu schützen und ein Stapeln der Schichtkörper zu ermöglichen. Nach dem Stand der Technik wird der Schutz durch ein geeignet behandeltes Papier oder eine Schutzfolie gebildet, die unmittelbar vor der Applikation des Schichtkörpers abgezogen wird.

Ein Nachteil dabei ist, dass das Abziehen des Schutzpapiers bzw. der Schutzfolie einen unerwünschten, zusätzlichen Arbeitsgang darstellt, der sich zudem kaum maschinell ausführen lässt. Gerade in der Automobilindustrie, in der solche Schichtkörper verwendet werden und in der das vermehrte Bestreben besteht, so weit wie möglich Arbeitsschritte zu automatisieren, wurde dieser Vorgang des Abziehens des Schutzpapiers bzw. der Schutzfolie als unerwünschter, zeitraubender und personalintensiver Vorgang gewertet.

Es ist die Aufgabe der vorliegenden Erfindung, einen Schichtkörper der eingangs genannten Art so weiterzubilden, dass die genannten Nachteile vermieden werden, namentlich so, dass die klebrige Harzoberfläche des Schichtkörpers geschützt ist und der Schichtkörper gestapelt werden kann, ohne ungewollt zusammenzukleben, dass aber eine unmittelbare Applikation ermöglicht wird, ohne ein Schutzpapier oder eine Schutzfolie abziehen zu müssen.

Gemäss der Erfindung wird dies durch die Merkmale im Kennzeichen des Patentanspruchs 1 bzw. des Patentanspruchs 2 erreicht.

Somit kann der Schichtträger vor der Applikation einer oberflächlichen Wärmevorbehandlung unterworfen werden, bei der die Folie auf einen Bruchteil ihrer ursprünglichen Abmessungen schrumpft und dabei die klebrige Oberfläche der Klebstoffschicht freigibt. Der Schichtträger haftet also wie gewohnt an der zu verstärkenden Stelle des Bleches. Bei der abschliessenden Wärmebehandlung schrumpft die Folie noch weiter bzw. wird in die Klebstoffschicht eingebettet, so dass sie die innige Verbindung zwischen Schichtträger und Blechoberfläche nicht beeinträchtigt.

Zwar ist aus der US-A-3190788 ein Klebstoffband bekanntgeworden, dessen klebrige Oberfläche mit einer unter Wärmeeinwirkung schrumpfenden Schutzfolie versehen ist. Diese Schutzfolie ist aber einstückig, ohne Schlitze oder dgl., ausgebildet und muss vor Gebrauch des Klebebandes entfernt werden. Um das Entfernen zu erleichtern, wird in jener US-Patentschrift vorgeschlagen, die Schutzfolie am einen Ende des Klebebandes zu erwärmen, so dass sie sich vom Klebeband löst und leichter abgezogen werden kann.

Bei einem Ausführungsbeispiel des erfindungsgemässen Schichtkörpers ist die Folie einstückig ausgebildet und mit einer Mehrzahl von Schlitzen versehen. Eine solche Folie lässt sich einfach auf die Klebstoffschicht auftragen. Insbesondere, wenn die Schlitze in parallel zueinander verlaufenden Reihen und von Reihe zu Reihe gegeneinander versetzt angeordnet sind, ergibt sich nach der Wärmevorbehandlung infolge der Schrumpfung der Folie eine netzartige Struktur, die die Klebstoffschicht gleichmässig auf der gesamten Fläche des Schichtkörpers durchtreten lässt. Die Form und Anordnung der Schlitze kann dabei je nach Anwendungsfall und Folienmaterial variieren.

Andererseits ist es aber auch möglich, die Folie durch eine Mehrzahl von parallel nebeneinander verlaufenden Bahnen zu bilden ; nach der Wärmevorbehandlung schrumpfen diese Bahnen zu schmalen Streifen, so dass nahezu die gesamte Klebstoff-Fläche freigelegt ist.

Das Verfahren zum Versteifen von Blechen, bei dem ein derartiger Schichtkörper zunächst einer ersten, einseitigen, oberflächlichen Wärmebehandlung unterworfen und anschliessend in an sich bekannter Weise auf das zu versteifende Blech aufgesetzt und einer zweiten Wärmebehandlung unterworfen wird, lässt sich sehr leicht automatisieren bzw. durch einen Roboter oder dgl. ausführen lassen ; das diffizile Abziehen des Schutzpapiers bzw. der Schutzfolie entfällt. Vorzugsweise erfolgt die erste Wärmebehandlung bei einer Temperatur, die die Folie schrumpfen, den Klebstoff jedoch noch nicht ausreagieren lässt.

2

Im folgenden werden Ausführungsbeispiele des Erfindungsgegenstandes, unter Bezugnahme auf die beiliegenden Zeichnungen, näher erläutert. In den Zeichnungen zeigen :

Fig. 1    eine schematische, perspektivische Ansicht eines ersten Ausführungsbeispiels eines Schichtkörpers nach der Erfindung vor der oberflächlichen Wärmevorbehandlung ;

Fig. 2    eine schematische, perspektivische Ansicht des ersten Ausführungsbeispiels eines Schichtkörpers nach der Erfindung nach der oberflächlichen Wärmevorbehandlung ;

Fig. 3    einen Teilschnitt in grösserem Maßstab nach der Linie III-III in Fig. 2 ;

Fig. 4    eine Schematische, perspektivische Ansicht eines zweiten Ausführungsbeispiels eines Schichtkörpers nach der Erfindung vor der oberflächlichen Wärmevorbehandlung ;

Fig. 5    einen Teilschnitt in grösserem Maßstab nach der Linie V-V in Fig. 4 ;

Fig. 6    eine schematische, perspektivische Ansicht des zweiten Ausführungsbeispiels eines Schichtkörpers nach der Erfindung nach der oberflächlichen Wärmevorbehandlung ;

Fig. 7    einen Teilschnitt in grösserem Maßstab nach der Linie VII-VII in Fig. 6, und

Fig. 8a-c    schematische Ansichten von weiteren Möglichkeiten der Ausbildung und Anordnung der Schlitze in einer einstückigen Folie.

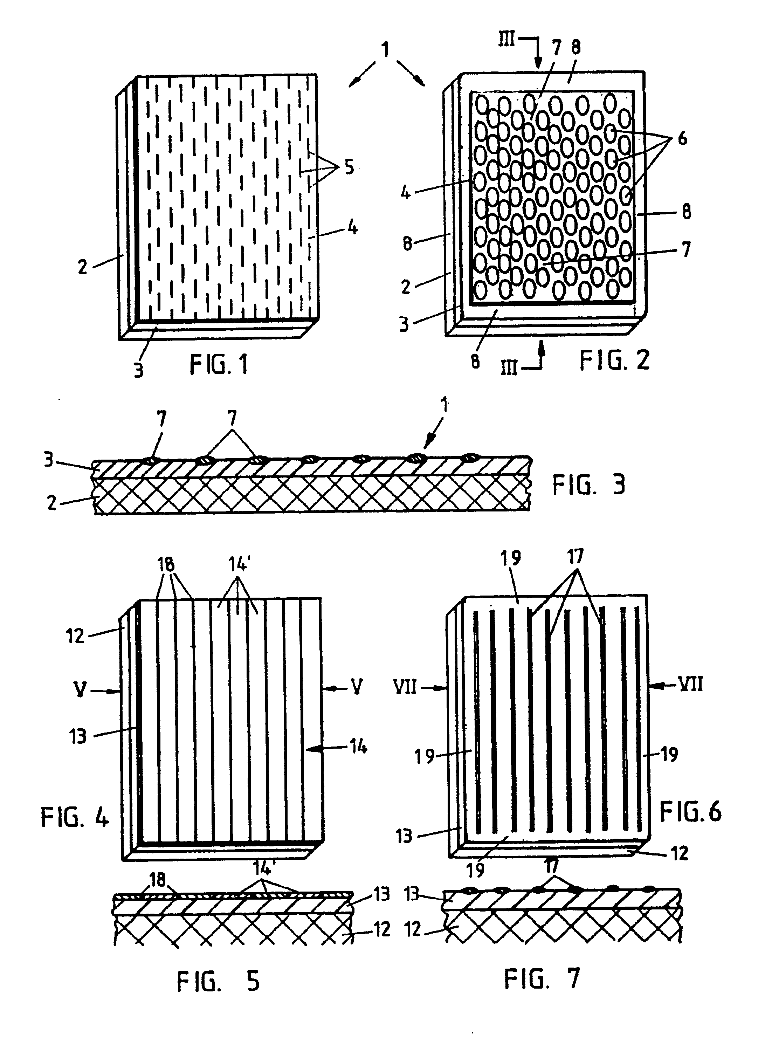

Das in den Fig. 1-3 dargestelle, erste Ausführungsbeispiel eines generell mit 1 bezeichneten Schichtkörpers besitzt einen Träger 2, z.B. ein harzgebundenes Glasfasergewebe, der einseitig mit einer Schicht 3 aus wärmehärtendem Harz versehen ist. Da die Oberfläche der Harzschicht 3 zweckmässigerweise klebrig ausgebildet ist, um den Schichtkörper an einem zu versteifenden Blech anbringen zu können, ohne zusätzliche Befestigungsmassnahmen zu treffen, ist eine Abdeckfolie 4 vorgesehen, die die Harzoberfläche vor Verschmutzung schützt und es erlaubt, dass vorbereitete, zugeschnittene Schichtkörper 1 mitsamt der darauf angebrachten, klebrigen Harzschicht 3 aufeinander gestapelt werden können, ohne aneinander kleben zu bleiben.

Je nach Anforderungen kann die Harzschicht 3 als ganzes selbstklebend ausgebildet sein, oder aber nur auf ihrer gegen aussen gerichteten Oberfläche eine Haftklebeschicht aufweisen.

Um nun das Abziehen der Schutzfolie 4 vor dem Anbringen des Schichtkörpers 1 zu vermeiden, sieht die Erfindung vor, dass die Folie aus einem Material hergestellt ist, das bei Wärmeeinwirkung schrumpft. Solche Materialien sind an sich bekannt und werden in zahlreichen unterschiedlichen Ausführungen auf dem Markt angeboten.

Gemäss dem ersten Ausführungsbeispiel nach Fig. 1 ist die Folie 4 einstückig ausgebildet und besitzt eine Vielzahl von Schlitzen 5, die in parallel zueinander verlaufenden Reihen und von Reihe zu Reihe gegeneinander versetzt angeordnet sind. In die sem Zustand haben die Schlitze 5 keinen Einfluss, da sie geschlossen sind, so dass mit der geschlitzten Folie 4 der gleiche Schutzeffekt erzielt ist wie mit einer durchgehenden Folie ohne Schlitze.

Soll nun der Schichtkörper 1 an einem zu verstärkenden Blech befestigt werden, braucht er nur kurz einer oberflächlichen Wärmevorbehandlung unterzogen zu werden, z.B. dadurch, dass er folienseitig beflammt oder an einem IR-Strahler vorbeigeführt wird ; dabei schrumpft die Folie 4 und nimmt eine netzartige Konfiguration ein, wobei sich die Schlitze 5 zu ovalen Öffnungen 6 vergrössern (Fig. 2). Dadurch wird ein erheblicher Teil der klebrigen Oberfläche der Harzschicht 3 freigesetzt, so dass der Schichtkörper wie üblich an der zu verstärkenden Stelle durch einfaches Auflegen bzw. leichtes Andrücken befestigt werden kann.

Ausserdem schrumpft die Folie 4 als Ganzes, so dass entlang des Randes der Harzschicht 3 Randbereiche 8 vollständig freigelegt werden. Dies ist ein höchst erwünschter, zusätzlicher Effekt, da dadurch die Haftung des Schichtkörpers 1, vor der abschliessenden Wärmebehandlung, am zu verstärkenden Bauteil im Randbereich ausgeprägter ist. Damit wird ein verbesserter Korrosionsschutz im Randbereich 8 erreicht, indem durch das vollflächige Verkleben des Randbereiches 8 am zu verstärkenden Bauteil keine Unterspülungen mit eventueller, partieller Ablösung des Schichtkörpers 1 vorkommen könne. Derartige Unterspülungen können eventuell dann auftreten, wenn der Schichtkörper 1 z.B. an die Innenseite eines Autokarosserie-Bauteils angebracht wird, das dann anschliessend einer Wasch- und/oder Grundierbehandlung unterzogen wird, bevor die abschliessende Wärmebehandlung erfolgt.

Bei der abschliessenden Wärmebehandlung wird das wärmehärtende Harz in der Schicht 3 zunächst flüssiger und umfliesst die verbliebenen Stege 7 der geschrumpften Schutzfolie 4 (Fig. 3), so dass nahezu die gesamte Oberfläche der klebrigen Harzschicht 3 zur Verbindung des Schichtkörpers 1 mit einem zu verstärkenden Blech oder dgl. beiträgt.

Der Schichtkörper 11 des zweiten Ausführungsbeispiels gemäss Fig. 4-7 ist ähnlich aufgebaut, mit einem harzgebundenen Glasfasergewebe 12, auf das eine Schicht 13 aus klebrigem, wärmehartendem Harz aufgebracht ist. Die Schutzfolie 14 aber, wiederum aus einem Material gefertigt, das bei Wärmeeinwirkung schrumpft, ist aus einzelnen Bahnen 14' zusammengesetzt, die aneinanderstossend verlegt sind und so die Wirkung einer durchgehenden Folie aufweisen (Fig. 4 und 5), da die einzelnen Bahnen durch Schlitze 18 mit minimaler Breite voneinander getrennt sind. Nach der Wärmevorbehandlung schrumpfen die Bahnen 14' zu schmalen Stegen 17, so dass wiederum nahezu die gesamte Oberfläche der klebrigen Harzschicht 13 freigegeben ist, um den Schichtkörper durch einfaches Andrücken an einem zu verstärkenden Blech zu befestigen (Fig. 6 und 7). Auch hier stellt sich wiederum der Effekt einer gesamthaften Schrumpfung auch in Längsrichtung der verbleibenden Stege 17 ein, so dass Randbereiche 19 der klebrigen Oberfläche der Harzschicht 13 vollständig freigegeben sind, mit den resultierenden Vorteilen, die im Zusammenhang mit dem ersten Ausführungsbeispiel erläutert wurden.

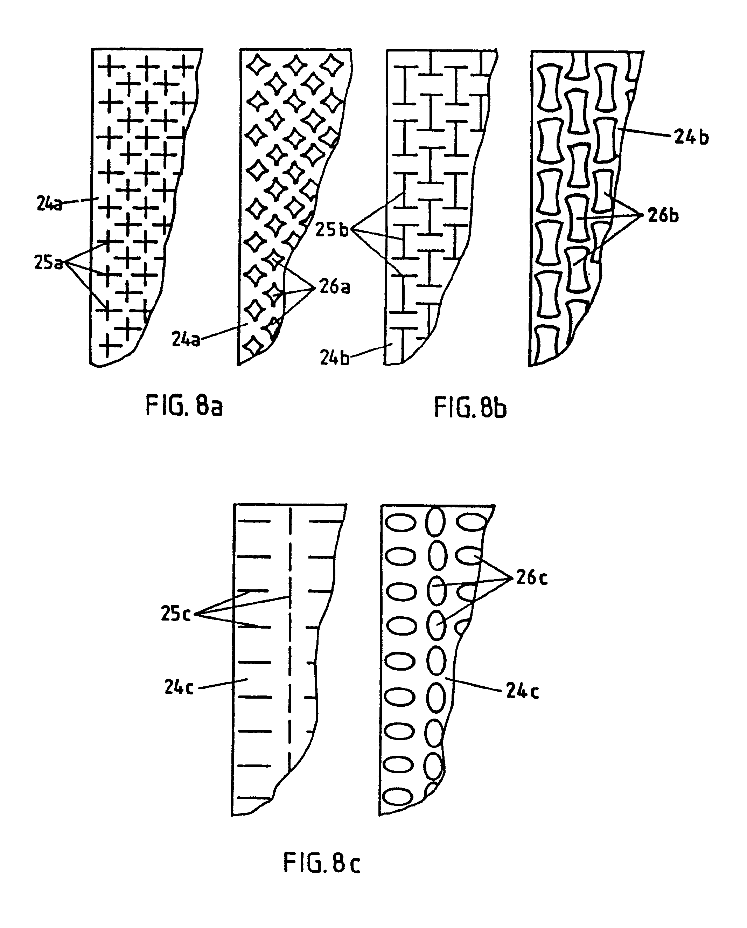

In den Figuren 8a bis 8c sind in einer schematischen, ausschnittweisen Darstellung verschiedene weitere Möglichkeiten der Ausbildung und Anordnung von Schlitzen in einer einstückigen Folie veranschaulicht. Auf der linken Seite der jeweiligen Figur ist dabei der Zustand vor der oberflächlichen Wärmebehandlung dargestellt und auf der rechten Seite der Zustand danach.

Gemäss Fig. 8a links sind die Schlitze 25a in der Folie 24a kreuzförmig ausgebildet und in parallelen Reihen nebeneinander angeordnet. Die Kreuzschlitze 25a einer Reihe sind jeweils gegenüber den Kreuzschlitzen benachbarter Reihen versetzt, um die zwischen den Schlitzen 25a verbleibenden Stege etwa gleichmässig breit zu halten. Nach der oberflächlichen Wärmebehandlung (Darstellung rechts in Fig. 8a) erweitern sich die Kreuzschlitze 25a zu kissenartig geformten Öffnungen 26a, so dass die Folie 24a wiederum eine netzartige Struktur annimmt.

Gemäss Fig. 8b links sind die Schlitze 25b in der Folie 24b Doppel-T-förmig ausgebildet und in parallelen Reihen nebeneinander angeordnet. Die Schlitze 25b einer Reihe sind ebenfalls gegenüber den Schlitzen benachbarter Reihen versetzt, um die zwischen den Schlitzen 25b verbleibenden Stege etwa gleichmässig breit zu halten. Nach der oberflächlichen Wärmebehandlung (Darstellung rechts in Fig. 8b) erweitern sich die Doppel-T-Schlitze 25b zu annähernd rechteckig geformten Öffnungen 26b, so dass die Folie 24b auch in diesem Fall eine netzartige Struktur annimmt.

Gemäss Fig. 8c links sind die Schlitze 25c in der Folie 24c als einfache, gerade Schlitze ausgebildet und alternierend längs- und querverlaufend in nebeneinander verlaufenden Reihen angeordnet. Nach der oberflächlichen Wärmebehandlung (Darstellung rechts in Fig. 8c) erweitern sich die Schlitze 25c zu ovalen Öffnungen 26c, ähnlich wie in Fig. 2 gezeigt, so dass die Folie 24c auch in diesem Fall eine netzartige Struktur annimmt.

Obwohl in den schematischen Zeichnungen nicht ausdrücklich dargestellt, ergibt sich auch hier die vollständige Freigabe eines Randbereichs der klebrigen Harzschicht, die das Haften des Schichtkörpers am zu versteifenden Bauteil verbessert.

Wie schon erwähnt wird die oberflächliche Wärmevorbehandlung bei einer solchen Temperatur vorgenommen, die die Folie schrumpfen, das Harz aber nicht aushärten lässt. Dies ist ohne Schwierigkeiten möglich, da heute Schrumpffolien zur Verfügung stehen, die schon bei vergleichsweise niedriger Temperatur eine starke Schrumpfung zeigen. Auch wenn die Schrumpfung bei der Wärmevorbehandlung noch nicht vollständig erfolgt, genügt im allgemeinen die freigesetzte Harzoberfläche, um die Schichtkörper in genügender Weise haftend zu befestigen. Bei der abschliessenden Wärmebehandlung wird dann die Schrumpfung vollständig erfolgen.

An dieser Stelle darf noch erwähnt werden, dass die Schlitzung der Abdeckfolien nicht unbedingt erforderlich ist : Je nach Material genügt eine erste Schrumpfung nach der ersten Wärmebehandlung, um den Schichtkörper genügend am zu verstärkenden Bauteil zu fixieren, und bei der zweiten Wärmebehandlung schrumpft dann die Folie so stark, dass sie keinen namhaften Teil der klebrigen Harzoberfläche mehr bedeckt, sondern im Lauf der zweiten, abschliessenden Wärmebehandlung in die Harzschicht eingebettet wird.

Obwohl die Erfindung vorstehend am Beispiel eines mit wärmehärtendem Harz versehenen Glasfasergewebes erläutert wurde, versteht es sich, dass das erfindungsgemässe Prinzip an sich bei beliebigen Schichtkörpern angewendet werden kann, die zumindest eine äussere Schicht mit klebriger Oberfläche besitzen.

## Patentansprüche

1. Schichtkörper, welcher einen ein- oder mehrschichtigen Träger (2 ; 12) aus einem harzgebundenen Glasfasergewebe und eine Klebstoffschicht (3 ; 13) aus einem wärmehärtenden, klebrigen Harz aufweist, die auf einer Oberfläche des Trägers (2 ; 12) aufgebracht ist, dadurch gekennzeichnet, dass die Klebstoffschicht (3 ; 13) mit einer bei Wärmeeinwirkung schrumpfenden, einstückigen Folie (4 ; 14 ; 24a-c) bedeckt ist, welche mit einer Mehrzahl von Schlitzen (5 ; 25a-c) versehen ist, die sich nach der Schrumpfung der Folie (4 ; 24a-c) zu Öffnungen (6 ; 26a-c) erweitern, so dass die Klebstoffschicht (3 ; 13) nach der Schrumpfung zum grössten Teil freigegeben ist.

2. Schichtkörper, welcher einen ein- oder mehrschichtigen Träger (12) aus einem harzgebundenen Glasfasergewebe und eine Klebstoffschicht (13) aus einem wärmehärtenden, klebrigen Harz aufweist, die auf einer Oberfläche des Trägers (12) aufgebracht ist, dadurch gekennzeichnet, dass die Klebstoffschicht (13) mit einer bei Wärmeeinwirkung schrumpfenden Folie (14) bedeckt ist, welche aus einer Mehrzahl von nebeneinander liegenden, parallelen Bahnen (14') besteht, die nach der Schrumpfung der Folie (14) zu schmalen Stegen (17) verringern, so dass die Klebstoffschicht (13) nach der Schrumpfung zum grössten Teil freigegeben ist.

3. Schichtkörper nach Patentanspruch 1, dadurch gekennzeichnet, dass die Schlitze (5) in parallel zueinander verlaufenden Reihen und von Reihe zu Reihe gegeneinander versetzt angeordnet sind.

4. Schichtkörper nach Patentanspruch 1, dadurch gekennzeichnet, dass die Schlitze (25a) kreuzförmig ausgebildet und in parallel zueinander verlaufenden Reihen, von Reihe zu Reihe gegeneinander versetzt, angeordnet sind.

5. Schichtkörper nach Patentanspruch 1, dadurch gekennzeichnet, dass die Schlitze (25b) Doppel-T-förmig ausgebildet und in parallel zueinander verlaufenden Reihen, von Reihe zu Reihe gegeneinander versetzt, angeordnet sind.

6. Schichtkörper nach Patentanspruch 1, dadurch gekennzeichnet, dass die Schlitze (25c) alternierend längs- und querverlaufend in nebeneinander verlaufenden Reihen angeordnet sind.

7. Verwendung des Schichtkörpers nach einem der vorangehenden Ansprüche als Versteifungsmaterial für Bleche.

8. Verfahren zum Versteifen von Blechen, dadurch gekennzeichnet, dass ein Schichtkörper nach einem der Patentansprüche 1-6 zunächst einer ersten, einseitigen, oberflächlichen Wärmebehandlung unterworfen und anschliessend in an sich bekannter Weise auf das zu versteifende Blech aufgesetzt und einer zweiten Wärmebehandlung unterworfen wird.

9. Verfahren nach Patentanspruch 8, dadurch gekennzeichnet, dass die erste Wärmebehandlung bei einer Temperatur erfolgt, die die Folie schrumpfen, den Klebstoff jedoch noch nicht ausreagieren lässt.

## Claims

1. Laminate, which comprises a single-layer or multi-layer support (2 ; 12) of a resin-bonded glass fibre fabric and an adhesive layer (3 ; 13) of a thermosetting, adhesive resin, which is applied to one surface of the support (2 ; 12), characterised in that the adhesive layer (3 ; 13) is covered with a one-piece film (4 ; 14 ; 24a-c) shrinking under the action of heat, which is provided with a plurality of slits (5 ; 25a-c), which after the shrinkage of the film (4 ; 24a-c) enlarge to form openings (6 : 26a-c), so that after shrinkage the adhesive layer (3 ; 13) is exposed for the major part.

2. Laminate, which comprises a single-layer or multi-layer support (12) of a resin-bonded glass fibre fabric and an adhesive layer (13) of a thermosetting, adhesive resin, which is applied to one surface of the support (12), characterised in that the adhesive layer (13) is covered with a film (14) shrinking under the action of heat, which consists of a plurality of parallel strips (14) lying one beside the other, which after shrinkage of the film (14) reduce to form narrow webs (17), so that after shrinkage the adhesive layer (13) is exposed for the major part.

3. Laminate according to patent Claim 1, characterised in that the slits (5) are arranged in rows extending parallel to each other and are staggered with respect to each other from row to row.

4. Laminate according to patent Claim 1, characterised in that the slits (25a) are constructed in the form of a cross and are arranged in rows extending parallel to each other and staggered with respect to each other from row to row.

5. Laminate according to patent Claim 1, characterised in that the slits (25b) are constructed with a double T shape and are arranged in rows extending parallel to each other and staggered with respect to each other from row to row.

6. Laminate according to patent Claim 1, characterised in that the slits (25c) are arranged to extend longitudinally and transversely in an alternate manner and in rows extending one beside the other.

7. Use of the laminate according to one of the preceding claims as a stiffening material for metal sheets.

8. Method for stiffening metal sheets, characterised in that a laminate according to one of patent Claims 1 to 6 is first of all subjected to a first surface heat treatment on one side and then in manner known per se is placed on the metal sheet to be stiffened and subjected to a second heat treatment.

9. Method according to patent Claim 8, characterised in that the first heat treatment takes place at a temperature which allows the film to shrink but does not yet allow the adhesive to react.

**Revendications**

1. Objet stratifié, qui présente un support mono- ou multicouche (2 ; 12) formé d'un tissu de fibres de verre lié avec de la résine, et une couche de colle (3 ; 13) formée d'une résine collante thermodurcissable, qui est appliquée sur une surface du support (2 ; 12), caractérisé en ce que la couche de colle (3 ; 13) est recouverte d'une feuille d'une seule pièce (4 ; 14 ; 24a-c) se rétractant sous l'action de la chaleur, qui est pourvue de fentes multiples (5 ; 25a-c) qui s'élargissent après le retrait de la feuille (4 ; 24a-c), en formant des ouvertures (6 ; 26a-c), de sorte que la plus grande partie de la couche de colle (3 ; 13) est dégagée après le retrait.

2. Objet stratifié, qui présente un support mono- ou multicouche (12) formé d'un tissu de fibres de verre lié avec de la résine, et une couche de colle (13) formée d'une résine collante thermodurcissable, qui est appliquée sur une surface du support (12), caractérisé en ce que la couche de colle (13) est recouverte d'une feuille (14) se rétractant sous l'action de la chaleur, qui est formée de bandes parallèles multiples (14') situées les unes à côté des autres, qui rétrécissent après le retrait de la feuille, en formant des nervures étroites (17), de sorte que la plus grande partie de la couche de colle (13) est dégagée après le retrait.

3. Objet stratifié selon la revendication 1, caractérisé en ce que les fentes (5) sont disposées en rangées orientées parallèlement entre elles, et sont décalées mutuellement d'une rangée à l'autre.

4. Objet stratifié selon la revendication 1, caractérisé en ce que les fentes (25a) sont conformées en croix et disposées en rangées orientées parallèlement entre elles, et sont décalées mutuellement d'une rangée à l'autre.

5. Objet stratifié selon la revendication 1, caractérisé en ce que les fentes (25b) sont conformées en double T et disposées en rangées orientées parallèlement entre elles, et sont décalées mutuellement d'une rangée à l'autre.

6. Objet stratifié selon la revendication 1, caractérisé en ce que les fentes (25c) sont disposées selon une orientation longitudinale et transversale alternée, et en rangées juxtaposées.

7. Utilisation de l'objet stratifié selon l'une des revendications précédentes comme matériau de renforcement pour des tôles.

8. Procédé de renforcement de tôles, caractérisé en ce qu'on soumet un objet stratifié selon l'une des revendications 1 à 6 d'abord à un premier traitement thermique superficiel, sur une seule face, et après cela, on l'applique sur la tôle à renforcer, d'une manière connue en soi, et on le soumet à un deuxième traitement thermique.

9. Procédé selon la revendication 8, caractérisé en ce que le premier traitement thermique s'effectue à une température qui provoque un retrait de la feuille, mais ne provoque pas encore le durcissement de la colle.

EP 0 297 036 B1

FIG. 1

FIG. 2

FIG. 3

FIG. 4

FIG. 5

FIG. 6

FIG. 7

7

FIG. 8a          FIG. 8b

FIG. 8c